Europäisches Patentamt

European Patent Office

Office européen des brevets

(19)

(11) Veröffentlichungsnummer: **0 075 045**
**B1**

(12)

# EUROPÄISCHE PATENTSCHRIFT

(45) Veröffentlichungstag der Patentschrift:
27.03.85

(21) Anmeldenummer: 81109198.2

(22) Anmeldetag: 29.10.81

(51) Int. Cl.⁴: **G 01 V 9/04**

(54) **Reflexlichtschranke.**

(30) Priorität: 19.09.81 CH 6037/81

(43) Veröffentlichungstag der Anmeldung:
30.03.83 Patentblatt 83/13

(45) Bekanntmachung des Hinweises auf die Patenterteilung:
27.03.85 Patentblatt 85/13

(84) Benannte Vertragsstaaten:
AT DE FR GB IT

(56) Entgegenhaltungen:
EP - A - 0 022 263
GB - A - 1 038 402
US - A - 3 739 177

ELECTRONIQUE INDUSTRIELLE, Nr. 6, 15. November 1980, Seiten 87-94 Paris, FR. J.P. VAUTRIN et al.: "Les barrages immatériels: l'électronique au service de la protection des opérateurs sur machines dangereuses"

(73) Patentinhaber: ELESTA AG ELEKTRONIK, CH-7310 Bad Ragaz (CH)

(72) Erfinder: Reiner, Eugen, Feld, CH-7324 Vilters (CH)

(74) Vertreter: Riederer, Conrad A., Dr., Bahnhofstrasse 10, CH-7310 Bad Ragaz (CH)

**Beschreibung**

Die Erfindung betrifft eine Reflexlichtschranke mit einem Gehäuse und einem Reflektor, wobei das Gehäuse einen Lichtsender zur Erzeugung eines Lichtstrahls und einen Lichtempfänger zum Feststellen des vom Reflektor zurückgeworfenen Lichtstrahls enthält und wobei der Reflektor den auftreffenden Lichtstrahl entgegengesetzt zur Einfallsrichtung zurückwirft.

Eine solche Reflexlichtschranke wird beispielsweise in der GB-A 1 038 402 beschrieben.

Reflexlichtschranken erfreuen sich großer Beliebtheit, weil sich Lichtsender und Lichtempfänger in einem Gehäuse befinden. Dadurch wird die Montage stark vereinfacht, da nur noch eine Seite der Anlage eines elektrischen Anschlusses bedarf. Die andere Seite der Anlage wird durch den Reflektor gebildet, der so ausgestaltet ist, daß der auffallende Lichtstrahl entgegengesetzt zur Einfallsrichtung zurückgeworfen wird. Die Anbringung des Reflektors ist daher nicht besonders kritisch. Je nach der Art des Reflektors sind Winkelabweichungen zur optischen Achse von bis zu 40° möglich, nämlich bis zu 15° bei Tripelreflektoren, bis zu 30° für Reflexfolien und bis zu 40° für die Reflexfolie Typ 7610 der Firma 3M.

Wird der Reflektor durch ein undurchsichtiges Objekt abgedeckt, so wird dies von der Reflexlichtschranke festgestellt, weil kein Senderlicht mehr zum Empfänger reflektiert wird. Damit dies der Fall ist, sollte natürlich auch möglichst kein Senderlicht vom Objekt zum Empfänger reflektiert werden.

Es hat sich nun gezeigt, daß Probleme entstehen können, wenn die Reflexfolie durch eine Plexiglasscheibe geschützt wird, oder wenn die Reflexlichtschranke auf Gegenstände ansprechen soll, die reflektieren, z. B. wenn der Lichtstrahl durch Glanzpapier unterbrochen werden soll. Bei den handelsüblichen Lichtschranken ist die optische Achse praktisch senkrecht zur Grundfläche des Gehäuses angeordnet. Dasselbe gilt auch für die Reflektoren bei ihrer üblichen Befestigung in einer Maschine. Dies hat zur Folge, daß ein Anteil des auf die Plexiglasabdeckung des Reflektors auftreffenden Lichts durch Oberflächenreflexion wieder in Richtung der optischen Achse zurückgeworfen wird und auf den Lichtempfänger auftrifft. Dieses infolge Oberflächenreflexion an der Plexiglasabdeckung beim Lichtempfänger eintreffende Licht kann einen wesentlichen oder sogar den ganzen Anteil der vermeintlichen Lichtreserve der Reflexlichtschranke ausmachen. In einem solchen Fall genügt bereits eine geringe Dejustierung der Reflexlichtschranke oder des Reflektors, daß das durch Oberflächenreflexion verursachte Licht nicht oder nicht mehr im gleichen Ausmaße auf den Lichtempfänger fällt, so daß die Lichtschranke nicht mehr funktioniert. Es genügt bereits eine Änderung des Auftreffwinkels um 2° bis 3°, um Störungen zu versursachen.

Bei Druckmaschinen und dergleichen sind die Befestigungsflächen für Lichtschranken in der Regel parallel zur Materialbahn. Infolgedessen trifft das Licht senkrecht auf das Material auf, auf das die Lichtschranke ansprechen soll. Ist nun aber dieses Material ein Glanzpapier, so entsteht ebenfalls eine Oberflächenreflexion in Richtung der optischen Achse, was zur Folge haben kann, daß die Lichtschranke fälschlicherweise keine Unterbrechung durch das Papier feststellt, da anstelle des vom Reflektor der Reflexlichtschranke kommenden, nun unterbrochenen Lichtstrahls, also dem Nutzlicht, das durch den Glanz verursachte Störlicht des Papiers tritt und bei genügender Stärke ein »Dunkelschalten« der Lichtschranke verhindert.

Beiden Arten von Störlicht, nämlich durch Oberflächenreflexion der Abdeckung des Reflektors oder durch Glanz eines Gegenstandes, ist im Gegensatz zur Reflexion von Tripel- oder Folienreflektoren gemeinsam, daß das reflektierte Licht nur bei praktisch senkrechtem Auftreffen des Lichts auf die Oberfläche der Reflektorabdeckung oder des Gegenstandes zum Lichtempfänger zurückgeworfen wird, bei geringer Schrägstellung hingegen bereits nicht mehr auf den Lichtempfänger auffällt.

Es ist daher Aufgabe der vorliegenden Erfindung, eine Reflexlichtschranke zu schaffen, welche die vorerwähnten Nachteile nicht aufweist. Gemäß der Erfindung wird dies bei einer Reflexlichtschranke der eingangs erwähnten Art dadurch erreicht, daß die Achse des Lichtstrahles um einen vorbestimmten Betrag zu einer Linie geneigt ist, die durch den Lichtsender geht und senkrecht zur Grundfläche des Gehäuses gerichtet ist und daß die Achse des Lichtstrahles nicht senkrecht zum Reflektor verläuft. Durch diese verblüffend einfache Maßnahme wird die Reflexlichtschranke wesentlich betriebssicherer. Da das auf die Abdeckung, z. B. eine Plexiglasscheibe, des Reflektors auftreffende Licht in einem Winkel $\neq$ 90° auftrifft, wirkt die Reflexion der Glasabdeckung nicht störend, weil sie nicht entlang der optischen Achse erfolgt und somit kein Licht zum Lichtempfänger zurückwirft. Dasselbe gilt für die Oberflächenreflexion an flachen Gegenständen, z. B. Glanzpapier.

Vorteilhaft beträgt die Neigung des Lichtsenders in bezug auf eine senkrecht zur Gehäusegrundfläche gezogene Linie etwa 5° bis 10°. Diese Abweichung ist derart gering, daß der aktive Teil einer bestehenden Lichtschranke ohne weiteres durch den aktiven Teil einer erfindungsgemäßen Lichtschranke ersetzt werden kann. Nur wenn der Reflektor zu knapp bemessen war, muß er verschoben werden, damit der Lichtstrahl noch voll auf ihn auftrifft. Dies ist in der Regel ohne Schwierigkeiten zu bewerkstelligen.

Es ist auch möglich, die Reflexlichtschranke so auszugestalten, daß die Neigung verstellbar ist. Dies bietet dem Anwender die Möglichkeit, die Neigung zu justieren.

Ein Ausführungsbeispiel der Erfindung wird nun unter Bezugnahme auf die Zeichnung beschrieben. Es zeigt

Fig. 1 den Strahlengang bei der erfindungsgemäßen Lichtschranke, wenn das Licht vom Reflektor zurückgeworfen wird. Ebenfalls ersichtlich ist der von dem Abdeckglas des Reflektors reflektierte Lichtanteil,

Fig. 2 den Strahlengang beim Durchgang eines reflektierenden Gegenstandes, z. B. Glanzpapier.

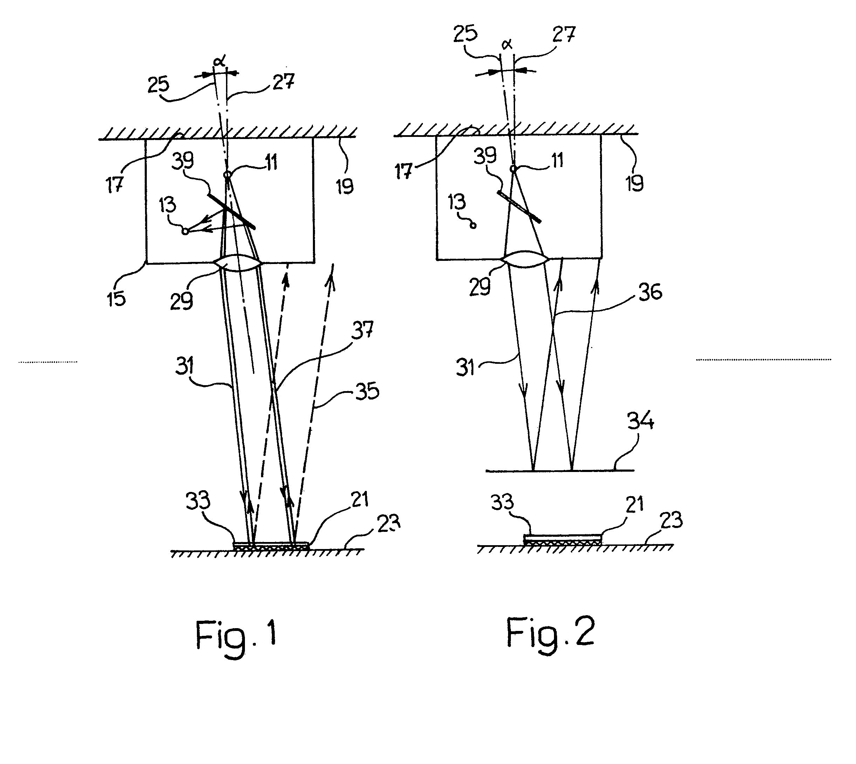

Wie in den Fig. 1 und 2 dargestellt befinden sich der Lichtsender 11 und der Lichtempfänger 13 in einem Gehäuse 15, dessen Grundfläche 17 an der Montagefläche 19, z. B. einer Maschine, aufliegt.

Der Reflektor 21 ist auf einer der Montagefläche 19 gegenüberliegenden Montagefläche 23 befestigt. Der Reflektor 21 ist beispielsweise ein sogenannter Tripelreflektor oder eine Reflexfolie, wie sie im Handel erhältlich sind.

Mit 27 ist eine Senkrechte zur Gehäusegrundfläche 17 dargestellt. Diese Senkrechte 27, welche durch den Lichtsender 11 geht, stellt bei bekannten Lichtschranken die Richtung der optischen Achse dar. Bei der erfindungsgemäßen Lichtschranke ist jedoch die optische Achse 25 um einen Winkel $\alpha$ zu dieser Senkrechten 27 geneigt.

Wegen dieser Neigung trifft das vom Lichtsender 11 ausgehende und von der Linse 29 gebündelte Licht 31 nicht senkrecht auf den Reflektor 21 auf, so daß der vom Abdeckglas 33 reflektierte Lichtanteil 35 nicht zur Lichtquelle zurückgeworfen wird. Der vom Reflektor in Richtung der Achse des Lichtsenders zurückgeworfene Lichtanteil 37 wird vom Spiegel 39 zum Lichtempfänger 13 geworfen.

In Fig. 2 wird der Strahlengang dargestellt, wie er bei einer Reflexion durch einen stark reflektierenden Gegenstand, z. B. Glanzpapier, verursacht wird. Dank der Neigung der optischen Achse 25 wird der auf das Papier auffallende Lichtstrahl 31 nicht in der gleichen Richtung zurückgeworfen. Der zurückgeworfene Strahl 36 trifft daher nicht auf den Lichtempfänger 13 auf. Die Lichtschranke stellt daher den Unterbruch durch das Glanzpapier sicher fest.

### Patentansprüche

1. Reflexlichtschranke mit einem Gehäuse (15) und einem Reflektor (21), wobei das Gehäuse einen Lichtsender (11) zur Erzeugung eines Lichtstrahls und einen Lichtempfänger (13) zum Feststellen des vom Reflektor zurückgeworfenen Lichtstrahls enthält und wobei der Reflektor (21) den auftreffenden Lichtstrahl entgegengesetzt zur Einfallsrichtung zurückwirft, dadurch gekennzeichnet, daß die Achse (25) des Lichtstrahles um einen vorbestimmten Betrag zu einer Linie (27) geneigt ist, die durch den Lichtsender (11) geht und senkrecht zur Grundfläche (17) des Gehäuses (15) gerichtet ist und daß die Achse des Lichtstrahles nicht senkrecht zum Reflektor verläuft.

2. Reflexlichtschranke nach Anspruch 1, dadurch gekennzeichnet, daß die Neigung etwa 5° bis 10° beträgt.

3. Reflexlichtschranke nach Anspruch 1 oder 2, dadurch gekennzeichnet, daß die Neigung verstellbar ist.

### Claims

1. Light barrier apparatus comprising a housing (15) and a reflector (21), said housing containing a light emitter (11) for generating a light beam, and a light sensor (13) for sensing the light beam reflected by the reflector (21), said reflector (21) reflecting the light opposite to the direction of incidence, characterised in that the axis (25) of the light beam is inclined by a predetermined amount to a line (27) passing through the light emitter (11) and being located vertically to the surface (17) of the base of the housing (15), and in that the axis of the light beam is not directed vertically to the reflector.

2. Light barrier apparatus as claimed in claim 1, characterised in that the inclination is about 5° to 10°.

3. Light barrier as claimed in claim 1 or 2, characterised in that the inclination is adjustable.

### Revendications

1. Dispositif de barrage lumineux avec un boîtier (15) et un réflecteur (21) dont le boîtier contient un émetteur de lumière (11) pour la production d'un rayon de lumière, et un récepteur de lumière (13) pour la détection du rayon de lumière réfléchi par le réflecteur, le réflecteur réfléchissant le rayon de lumière arrivant à l'encontre de la direction d'incidence, caractérisé en ce que l'axe du rayon de lumière est inclinée d'un montant prédéterminé par rapport à une ligne (27) passant par l'émetteur de lumière (11) et perpendiculière à la base (17) du boîtier (15) et en ce que l'axe du rayon de lumière n'est pas perpendiculier au réflecteur.

2. Dispositif de barrage lumineux selon la revendication 1, caractérisé en ce que l'inclinaison est d'environ 5° à 10°.

3. Dispositif de barrage lumineux selon les revendications 1 ou 2, caractérisé en ce que l'inclinaison est ajustable.

Fig. 1

Fig. 2